# EUROPEAN PATENT APPLICATION

(11) **EP 4 618 527 A1**
(43) Date of publication of application: **17.09.2025**
(21) Application number: 24207307.0
(22) Date of filing: 17.10.2024
(51) Int. Cl.: H04N 1/00, H04N 1/32

(54) **SMART PHOTO PRINT AND ALBUM**

(30) Priority: 11.03.2024 US 202463563776 P
(71) Applicant: SofTech Texas LLC, Houston TX 77040 (US)
(72) Inventor: OZ, Ozkan, Houston, 77040 (US)
(74) Representative: Loo, Chi Ching

(57) **Abstract**

The present invention is a smart photo print with a built-in NFC chip. The NFC chip allows the user to tap a phone or smart device to the printed photo to access a variety of features, including displaying, sharing, storing, and editing photos or videos. The invention includes a unique serial number or identifier to access the smart features and ensure security.

## Description

The current application claims a priority to the U.S. Provisional Patent application serial number 63/563,776 filed on 03/11/2024.

### FIELD OF THE INVENTION

The present invention relates generally to the realm of printed photos, photo albums, and associated smart products. More specifically, the present invention introduces a novel concept of incorporating embedded near-field communication (NFC) chips into printed photos, magnets, and canvases to enable interactive functionalities, thereby transforming traditional photo media into dynamic, interactive experiences.

### BACKGROUND OF THE INVENTION

While conventional photo prints offer static representations of memories, there is a growing demand for innovative solutions that enhance user engagement and interaction with printed photos, magnets, and canvases. The present invention aims to address this need by introducing a groundbreaking approach to printed photo media, leveraging embedded NFC chip technology to unlock a multitude of interactive features.

### BRIEF DESCRIPTION OF THE DRAWINGS

FIG. **1** illustrates three distinct examples of NFC/RFID chip-embedded photo prints, each made from different materials.
FIG. 1A shows a magnet with an embedded NFC/RFID chip;
FIG. 1B shows photo paper with an embedded NFC/RFID chip;
FIG. 1C shows a canvas vinyl with an embedded NFC/RFID chip;
FIG. **2** depicts the front and back sides of a smart photo print;
FIG. 2A depicts the front side of a smart photo print;
FIG. 2B depicts the back side of a smart photo print; and
FIG. **3** illustrates the step-by-step process involved in activating the digital album associated with the smart photo print and accessing its content using a smartphone.

### DETAILED DESCRIPTIONS OF THE INVENTION

All illustrations of the drawings are for the purpose of describing selected versions of the present invention and are not intended to limit the scope of the present invention.

The present invention introduces a groundbreaking paradigm shift in the realm of printed photos, magnets, and canvases by integrating embedded NFC chips into traditional media. Each printed photo, magnet, or canvas is uniquely identified by a serial number, serving as a key component in activating its interactive features and functionalities.

The core innovation of the present invention lies in its seamless integration of embedded NFC chips into traditional photo media, transcending the limitations of conventional static prints. Whether printed on standard photo paper, banner-type material, canvas, or fabric, the embedded NFC chip technology revolutionizes the way users interact with and experience printed media.

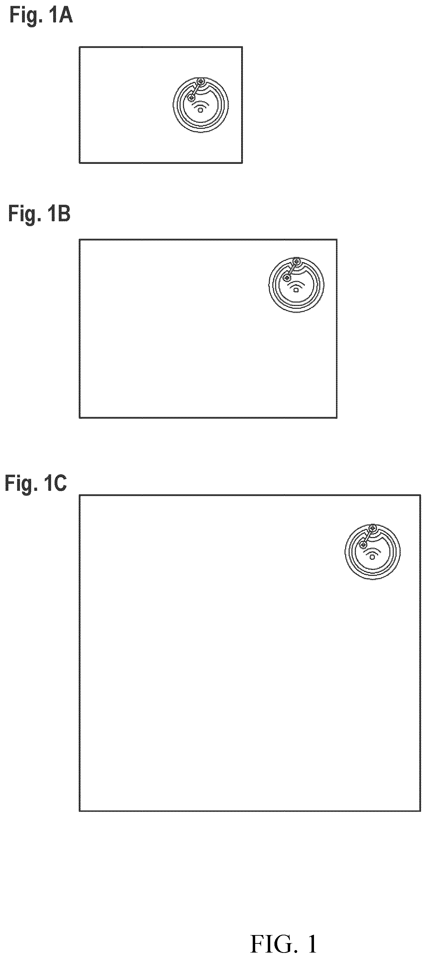

In reference to FIG. 1, the visual representations showcase the versatility of the present invention across various mediums, highlighting its adaptability to different user preferences and applications. FIG. 1A shows an embodiment of the present invention wherein the NFC chip is embedded in a magnet. FIG. 1B shows an embodiment of the present invention wherein the NFC chip is embedded in photo paper. FIG. 1C shows an embodiment of the present invention wherein the NFC chip is embedded in a canvas vinyl.

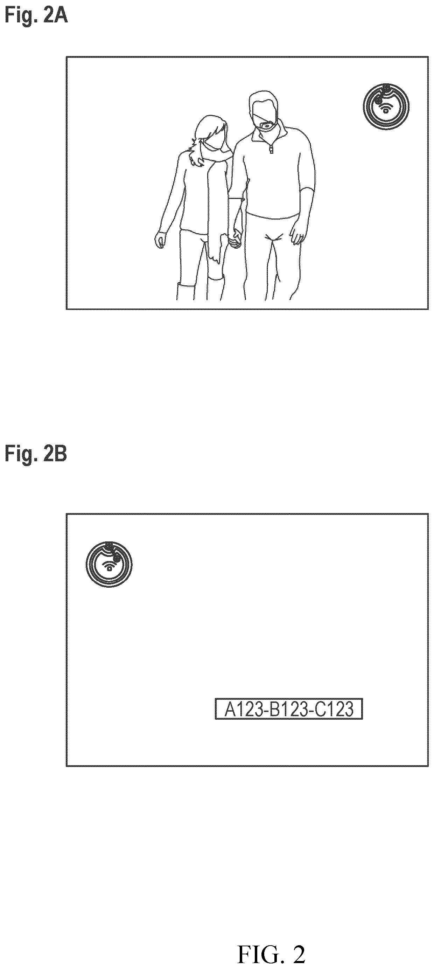

In reference to FIG. **2****,** the front side (FIG. 2A) showcases the visual representation of the printed photo, demonstrating the seamless integration of the NFC/RFID chip within the material. On the backside (FIG. 2B), the unique serial number assigned to each smart print is visible, serving as a key identifier for activating the digital album associated with the print.

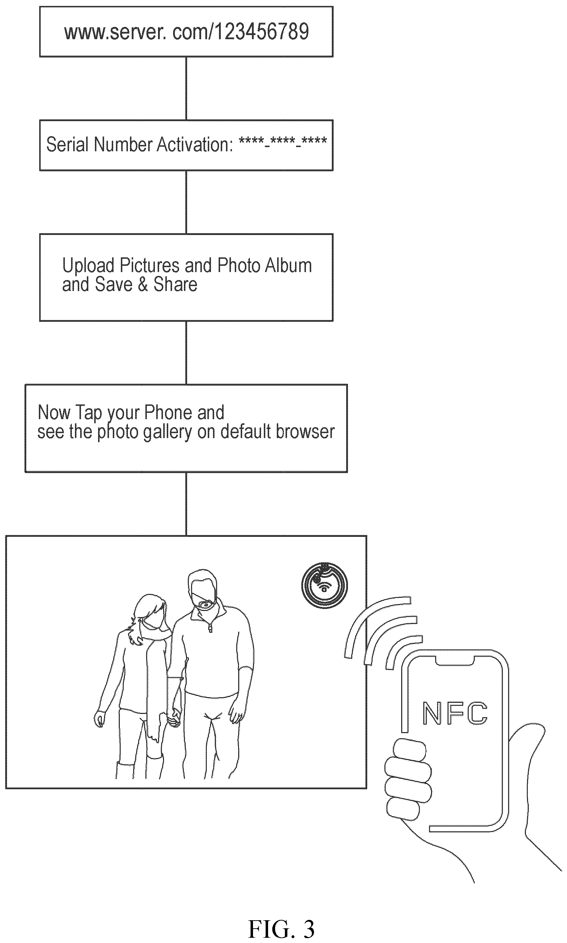

In reference to FIG. **3****,** the present invention's digital album associated with the smart photo print is activated and accessed using a smartphone as follows:
1. Click the server link: The process begins with the user accessing a designated server link or online platform.
2. Activate the serial number: Upon accessing the server link, the user proceeds to activate the unique serial number assigned to the smart photo print. This serial number serves as a key identifier for linking the print to its corresponding digital album.
3. Upload pictures, save, and share: Once the serial number is activated, the user has the option to upload pictures to the digital album, customize its content, and save their changes. Additionally, users can share the digital album with others, enabling seamless collaboration and interaction.
4. Tap the phone and view the photo gallery: After completing the activation process and uploading desired content, the user can tap their smartphone on the NFC/RFID chip embedded within the smart photo print. This action establishes a connection between the print and the smartphone, allowing the user to instantly access and view the photo gallery associated with the print.
Key components of the present invention include:
- Media Material: The present invention may include NFC chips embedded into various physical photo media, including but not limited to photo paper, banner-type material, canvas, or fabric.
- Embedded NFC Chip: The NFC chip is strategically integrated within the media to enable interactive functionalities.
- Serial Number: A serial number or other identifier is uniquely assigned to each print, magnet, or canvas for activation and identification.
- Application Independence: The present invention operates without the need for a dedicated application, ensuring broad accessibility and usability.

During the manufacturing process, the NFC chip is precisely embedded or attached to the photo print, magnet, or canvas, with each item receiving a unique serial number for identification and activation purposes. The present invention represents a convergence of traditional print media with cutting-edge NFC technology, offering users an unparalleled interactive experience across a diverse range of smart products.

### Integration of NFC Technology:

The NFC chip's placement within the media is adaptable, allowing for flexible integration strategies across prints, magnets, and canvases. Whether positioned on the top, in the middle, or underneath the backside of the media material, the NFC chip ensures seamless interaction with users' NFC-enabled devices.

The versatility in NFC chip placement caters to the diverse characteristics and designs of different media types, ensuring compatibility across various formats and applications.

Regardless of the media material or design, the present invention encompasses all photo prints, magnets, and canvases embedded with an NFC chip, irrespective of the embedding method or material type. This inclusive approach underscores the patent's comprehensive coverage and applicability across smart products.

### Serial Number and Activation Mechanism:

The serial number serves as a crucial element in the activation and identification of each printed photo, magnet, or canvas. While traditionally associated with alphanumeric combinations, the serial number can encompass a wide range of registration identifiers, including PINs, passwords, or alphanumeric sequences.

The activation process is streamlined and user-friendly, ensuring seamless access to the interactive features of the photo media. The present invention covers a broad spectrum of registration mechanisms, including those without the reliance on a dedicated application.

### Application-Independent Operation:

One of the defining features of the present invention is its application-independent operation, allowing users to interact with printed media without the need for a specific app. This ensures accessibility and usability across various devices and platforms, enhancing the overall user experience.

While the system operates autonomously without an application, the present invention also supports enhanced functionalities when integrated with a dedicated app. This dual-mode operation provides users with flexibility and choice, catering to diverse preferences and usage scenarios across smart products.

### Enhanced User Experience and Customization:

The interactive interface of the present invention extends beyond basic tapping functionalities, offering users a range of customization options across printed photos, magnets, and canvases. Users can enhance their media by adding metadata such as event dates, titles, taglines, and toggles between different display modes.

Additionally, the system facilitates easy sharing of media through QR codes linked to digital albums, enabling seamless digital integration across platforms. Users retain full control over their privacy settings, with options to designate media as public or private and delete media as needed.

### Conclusion:

The present invention represents a significant advancement in the field of printed media and smart products, bridging the gap between traditional print media and interactive digital experiences. Its innovative integration of embedded NFC chip technology offers users a dynamic and engaging way to interact with their memories, revolutionizing the concept of photo prints, magnets, and canvases.

Although the invention has been explained in relation to its preferred embodiment, it is to be understood that many other possible modifications and variations can be made without departing from the spirit and scope of the invention.

## Claims

1. A smart photo print and album comprising,
a physical photo print, said print including but not limited to printed photos, photo magnets, and photo canvases;
an integrated NFC chip, said NFC chip integrated into the print allowing the user to interact with the NFC chip; and
a serial number or other unique identifier.

2. The smart photo print and album of claim 1, wherein the integrated NFC chip allows the user to tap the smart photo print with a smartphone or other device, thereby activating smart features of the smart photo print, and the serial number or other unique identifier ensures security.

3. The smart photo print and album of claim 2, wherein the smart features comprise displaying, sharing, storing, and editing a digital photo or video collection via the NFC chip and serial number or other unique identifier.

4. The smart photo print and album of claim 1, wherein the smart features may be accessed through a web browser or a dedicated application.

5. A method of utilizing the smart photo print and album of claim 1, comprising the steps of accessing a designated server link or online platform; entering the serial number or unique identifier to link the print to its corresponding digital album; uploading photos or videos to save, share, edit, and customize; and tapping a phone or other smart device to the NFC chip to access and view the uploaded photos or videos associated with the smart photo print, either via an internet browser or a dedicated application.
